# FASCICULE DE BREVET EUROPEEN

(11) **EP 4 046 233 B1**
(45) Date de publication et mention de la délivrance du brevet: **22.05.2024**
(21) Numéro de dépôt: 20789185.4
(22) Date de dépôt: 15.10.2020
(51) Int. Cl.: H01M 50/581, H01M 50/502

(54) **DISPOSITIF DE MISE EN COURT-CIRCUIT COMPRENANT UN ÉLÉMENT THERMO-ACTIVABLE**
TRENNVORRICHTUNG UND KURZSCHLUSSVORRICHTUNG MIT EINEM THERMISCH AKTIVIERBAREN BAUTEIL
DISCONNECTING DEVICE AND SHORT CIRCUITING DEVICE COMPRISING A THERMALLY ACTIVABLE ELEMENT

(30) Priorité: 18.10.2019 FR 1911692
(43) Date de publication de la demande: 24.08.2022
(73) Titulaire: SAFT, 92300 Levallois-Perret (FR)
(72) Inventeur: BERLUREAU, Thierry, 33300 BORDEAUX (FR); RIGOBERT, Gérard, 33370 FARGUES St HILAIRE (FR); ROY, Richard, 33600 PESSAC (FR)
(74) Mandataire: Hirsch & Associés
(86) Numéro de dépôt international: PCT/EP2020/079098
(87) Numéro de publication internationale: WO 2021/074323

(56) Documents cités:
- DE-A1-102013 018 397
- KR-A- 20190 059 831
- KR-B1- 101 500 229
- US-A1- 2009 159 311

## Description

### DOMAINE TECHNIQUE

La présente invention se rapporte à un dispositif de déconnexion, en particulier à un dispositif de déconnexion adapté à déconnecter deux éléments électrochimiques reliés électriquement entre eux.

La présente invention se rapporte également à un dispositif de mise en court-circuit de deux électrodes de polarités opposées au sein d'un élément électrochimique.

### ETAT DE LA TECHNIQUE

Un élément électrochimique ou générateur électrochimique (ces deux termes étant équivalents dans la présente description) est un dispositif de production d'électricité dans lequel de l'énergie chimique est convertie en énergie électrique. L'énergie chimique est constituée par des composés électrochimiquement actifs déposés sur au moins une face d'électrodes disposées dans le générateur électrochimique. L'énergie électrique est produite par des réactions électrochimiques au cours d'une décharge du générateur électrochimique. Les électrodes, disposées dans un conteneur, sont connectées électriquement à des bornes de sortie de courant qui assurent une continuité électrique entre les électrodes et un consommateur électrique auquel le générateur électrochimique est associé. Les bornes de sortie de courant positive et négative peuvent être fixées soit sur les parois de faces opposées du conteneur du générateur électrochimique, soit sur la paroi d'une même face du conteneur.

Une batterie comprend généralement plusieurs éléments électrochimiques connectés électriquement entre eux, en série ou en parallèle, au moyen de barrettes métalliques. Ces barrettes métalliques présentent une section suffisante pour permettre la circulation de courants d'intensité élevée entre les éléments électrochimiques. La batterie comprend également généralement un circuit électronique de contrôle et de gestion des éléments électrochimiques, destiné à mesurer leur état de charge et/ou leur état de santé, notamment au moyen de mesures de tension ou de courant prises individuellement élément par élément ou prises sur un groupe d'éléments. La batterie peut aussi comprendre un dispositif de régulation de sa température. Dans un souci de commodité de branchement électrique entre les éléments électrochimiques, les bornes de sortie de courant positive et négative sont souvent fixées sur la paroi d'une même face du conteneur, souvent sur un couvercle destiné à fermer le conteneur de l'élément.

Une anomalie dans le fonctionnement de la batterie peut être causée par le dysfonctionnement de l'un des générateurs électrochimiques (court-circuit, surcharge, ...) ou par une perturbation extérieure (choc, élévation de la température, etc.) ou encore par une défaillance du système électronique gérant l'état de charge ou d'autres paramètres des générateurs de la batterie.

Par exemple, lorsqu'un générateur électrochimique au lithium est soumis à une surcharge, sa température augmente. L'augmentation de température entraîne une augmentation du courant de charge qui favorise encore l'augmentation de température. Si le générateur ne dispose pas d'un système de refroidissement suffisant pour évacuer la chaleur émise, celui-ci se retrouve en situation d'emballement thermique : l'augmentation de température est alimentée par le générateur lui-même. L'augmentation incontrôlée de la température du générateur entraîne la génération de gaz qui peut entraîner une augmentation de la pression interne dans le générateur, qui va ouvrir le système de sécurité d'évacuation des gaz. En cas de libération de gaz chauds, dont la température peut atteindre 650°C, ces gaz viennent au contact des autres générateurs de la batterie. Il existe alors un risque que le phénomène d'emballement thermique se propage à l'ensemble des générateurs de la batterie, ce qui conduit à la destruction totale de la batterie.

Les documents US 2016/0190657, EP 1 705 735 et EP 1 126 534 décrivent des dispositifs coupe-circuit permettant d'interrompre la circulation du courant lorsque la pression dans le conteneur du générateur atteint une certaine valeur. Toutefois comme mentionné ci-dessus, l'augmentation de la pression intervient à un stade déjà avancé de l'emballement thermique si bien que la pression n'est pas un paramètre permettant la détection précoce d'un emballement thermique. De plus, la fiabilité de ce type de dispositif n'est pas satisfaisante. En effet, il a été constaté qu'avec le temps les dispositifs sensibles à la pression sont susceptibles de se déclencher en raison de l'accumulation de gaz dans le conteneur de l'élément, ces gaz étant néanmoins formés au cours d'un fonctionnement normal de l'élément. Le déclenchement de ce type de dispositif entraine ainsi une déconnexion qui n'était pas nécessaire.

Le document DE 10 2014 200 197 A1, décrit un dispositif de déconnexion électrique activé par une augmentation de la pression ou de la température. Ce document décrit un mode de réalisation particulier dans lequel le dispositif comprend un matériau d'expansion dont la dilatation va indirectement déconnecter la carte électronique associée à l'élément.

Toutefois, ce document ne décrit ni la nature de ce matériau d'expansion, ni la valeur seuil de température à partir de laquelle ce matériau s'expand. Or la nature de ce matériau d'expansion est déterminante pour l'efficacité du dispositif.

Il existe donc un besoin de fournir un dispositif plus fiable permettant de détecter précocement la survenue d'un emballement thermique et de lutter efficacement contre la propagation du phénomène d'emballement thermique.

### RESUME DE L'INVENTION

L'invention a pour premier objet un ensemble comprenant :
a) une pièce de connexion (3) comportant au moins une zone de fragilisation (3a, 3b) et
b) un dispositif de déconnexion (4) ledit dispositif de déconnexion étant destiné à déconnecter deux éléments électrochimiques (1, 2) reliés entre eux par ladite pièce de connexion (3), ledit dispositif de déconnexion comprenant :
   i) des microparticules (5) aptes à s'expandre lorsque leur température atteint une valeur seuil, ladite valeur seuil étant inférieure à 150°C,
   ii) une capsule (4a, 4b) entourant l'ensemble des microparticules, ladite capsule étant disposée en sorte que, lorsque la température des microparticules atteint ladite valeur seuil, l'expansion des microparticules entraîne une déformation de la capsule, cette déformation exerçant une pression au voisinage de la dite au moins une zone de fragilisation, la pression entraînant une déchirure de ladite au moins une zone de fragilisation, la déchirure conduisant à une rupture de la connexion entre lesdits deux éléments électrochimiques.

Selon un mode de réalisation, ladite capsule est constituée d'un matériau non conducteur de courant électrique.

Selon un mode de réalisation, les microparticules sont des microsphères.

Selon un mode de réalisation les microparticules ne sont pas conductrices d'électricité.

L'invention a pour second objet une batterie comprenant :
- au moins deux éléments électrochimiques, chaque élément électrochimique comprenant au moins deux bornes de sortie de courant, et
- au moins un ensemble tel que décrit ci-dessus, la pièce de connexion étant connectée entre une borne de sortie de courant d'un premier élément électrochimique et une borne de sortie de courant d'un second élément électrochimique.

Un troisième objet de la présente invention est un élément électrochimique comprenant :
a) au moins deux bornes de sortie de courant de polarités opposées (7,8), et
b) un dispositif de mise en court-circuit (4) de deux bornes de polarités opposées (7,8), ledit dispositif comprenant :
   i) des microparticules (5) aptes à s'expandre lorsque leur température atteint une valeur seuil, ladite valeur seuil étant inférieure à 150°C,
   ii) une capsule (4a, 4b) entourant l'ensemble des microparticules, ladite capsule étant constituée d'un matériau conducteur de courant électrique ou constituée d'un matériau non conducteur de courant électrique, ledit matériau non conducteur de courant électrique étant soit recouvert d'un revêtement conducteur électrique, soit en contact avec une pièce électriquement conductrice, ladite capsule étant disposée en sorte que, lorsque la température des microparticules atteint ladite valeur seuil, l'expansion des microparticules entraîne une déformation de la capsule, la déformation de la capsule ayant pour effet de connecter deux bornes de polarités opposées.

Selon un mode de réalisation, l'élément électrochimique tel que défini ci-dessus, comprend un fusible, connecté entre les deux bornes de polarité opposée.

Selon un mode de réalisation, le matériau conducteur de courant électrique de ladite capsule est choisi parmi l'aluminium, le cuivre et l'acier inoxydable.

Selon un mode de réalisation, le matériau non conducteur de courant électrique de ladite capsule est une matière plastique.

Selon un mode de réalisation, la pièce électriquement conductrice est un bilame métallique.

Selon un mode de réalisation, la pièce électriquement conductrice est constituée d'un matériau à mémoire de forme.

Selon un mode de réalisation, l'élément électrochimique tel que défini ci-dessus comprend :
a) un conteneur comprenant une ouverture pour l'introduction d'un faisceau électrochimique, et
b) un couvercle placé sur ladite ouverture,
dans lequel lesdites au moins deux bornes de sortie de courant de polarités opposées et le dispositif de mise en court-circuit sont placés sur ou à travers le couvercle.

Selon un mode de réalisation, une des au moins deux bornes de sortie de courant est en contact direct avec le couvercle et une borne de polarité opposée est isolée électriquement du couvercle.

Selon un mode de réalisation, l'élément électrochimique tel que défini ci-dessus est de type lithium-ion à électrolyte liquide ou solide, lithium-métal à électrolyte liquide ou solide, nickel métal-hydrure ou nickel cadmium.

Un quatrième objet de l'invention est une batterie comprenant ledit élément électrochimique, tel que décrit ci-dessus, correspondant au troisième objet de l'invention.

Le premier et le troisième objet de l'invention constituent deux solutions alternatives au même problème technique. En effet tous deux permettent de détecter précocement la survenue d'un emballement thermique et d'empêcher ainsi sa propagation.

### BREVE DESCRIPTION DES FIGURES

[Fig. 1a] est une représentation schématique de la batterie, second objet de l'invention. La batterie comprend l'ensemble formé par la pièce de connexion et le dispositif de déconnexion.
[Fig. 1b] représente l'effet de l'expansion des microparticules selon un mode de réalisation particulier dudit ensemble, premier objet de l'invention.
[Fig. 2a] représente un autre mode de réalisation du dispositif de déconnexion dans lequel la capsule se trouve dans une cavité formée dans la pièce de connexion.
[Fig. 2b] représente l'effet de l'expansion des microparticules dans le cas du mode de réalisation de la figure 2a.
[Fig. 3] est une représentation schématique de l'élément électrochimique selon l'invention. Cet élément comprend le dispositif de mise en court-circuit.

### DESCRIPTION DETAILLEE DE MODES DE REALISATION DE L'INVENTION

L'ensemble et l'élément électrochimique selon l'invention présentent une fiabilité accrue et permettent une détection précoce d'un emballement thermique en comparaison avec les dispositifs de l'art antérieur pour les raisons suivantes :
- le dispositif de déconnexion ainsi que le dispositif de mise en court-circuit sont directement activés par une augmentation de la température et non par une augmentation de la pression. En effet comme mentionné précédemment, l'augmentation de la pression intervient à un stade déjà avancé de l'emballement thermique si bien que la pression n'est pas un paramètre permettant de prévenir suffisamment tôt l'apparition d'emballement thermique. De plus, comme mentionné précédemment, il a été constaté qu'avec le temps les dispositifs sensibles à la pression sont susceptibles de se déclencher alors même que l'élément présente un fonctionnement normal entraînant ainsi une déconnexion qui n'était pas nécessaire.
- Les microparticules comprises dans le dispositif de déconnexion et le dispositif de mise en court-circuit sont aptes à s'expandre lorsque la température atteint une valeur seuil, ladite valeur seuil étant inférieure à 150°C, là où les matériaux expansibles utilisés dans les dispositifs de l'art antérieur s'expandent à partir d'une valeur seuil supérieure à celle de la présente invention. Par conséquent, les microparticules permettent de déclencher lesdits dispositifs suffisamment tôt pour pouvoir empêcher la propagation de l'emballement thermique.

On entend par dispositif de déconnexion, un dispositif permettant de déconnecter électriquement au moins deux éléments électrochimiques reliés entre eux par une pièce de connexion.

On entend par pièce de connexion, toute pièce permettant d'assurer le passage du courant et reliant au moins deux éléments électrochimiques entre eux. Cette pièce de connexion peut notamment se présenter sous la forme d'une barrette métallique.

On entend par capsule une pièce constituée de deux parties :
- une partie formant un contenant permettant de contenir lesdites microparticules,
- une partie formant une pièce d'obturation, tel qu'un couvercle.

Les deux parties de la capsule peuvent être assemblées entre elles par thermo-soudure, par sertissage ou par collage.

Chaque microparticule peut avoir une forme quelconque. Chaque microparticule peut en particulier avoir une forme de sphère pleine ou de tube plein. De préférence, les microparticules sont des microsphères.

Chaque microparticule peut présenter un volume équivalent au volume d'une sphère pleine ayant un diamètre d₁ allant de 10 à 50 µm lorsque la température de la microparticule est inférieure à ladite valeur seuil et un volume équivalent au volume d'une sphère pleine d'un diamètre d₂ 3 à 5 fois supérieur au diamètre d₁ lorsque la température de la microparticule est supérieure ou égale à ladite valeur seuil. Le diamètre d₂ peut aller de 30 à 250µm.

Lorsque la température des microparticules atteint ladite valeur seuil, le volume total des microparticules peut augmenter d'un rapport allant de 9 à 125.

Il est possible de se procurer de telles microparticules auprès de la société KUREHA.

Ladite valeur seuil peut être égale à 140°C, 130°C, 120°C, 110°C, 100°C, 90 °C ou 80 °C. De préférence, ladite valeur seuil peut être comprise entre 80 et 120°C.

Ladite capsule entourant les microparticules peut être constituée d'un matériau non conducteur de courant électrique. Ce matériau non conducteur peut être en matière plastique.

La capsule peut être constituée d'un matériau apte à se déformer lors de l'expansion des microparticules, la déformation de la capsule entraînant la rupture de la pièce de connexion. L'expansion des microparticules survient dès que la température atteint ladite valeur seuil, ainsi dès que la valeur seuil est franchie, le contenu de la capsule va s'expandre de manière brutale jusqu'à entraîner la rupture de la pièce de connexion.

La soudaineté de l'expansion de la capsule signifie que la capsule peut s'expandre en un laps de temps inférieur à dix secondes, de préférence inférieur à cinq secondes.

La capsule comprise dans le premier objet de l'invention peut être disposée sur un support. Ce support peut être formé par une pièce isolante fixée à la pièce de connexion qui relie les éléments électrochimiques entre eux.

Selon un autre mode de réalisation, la pièce de connexion peut servir de support à la capsule. Dans ce cas la pièce de connexion est disposée de telle manière qu'elle comprend une cavité permettant de contenir ladite capsule.

La pression pouvant être exercée sur la pièce de connexion par l'expansion des microparticules va de 0,5 N/mm² à 1,2 N/mm².

La pièce de connexion peut comporter au moins une zone de fragilisation et l'expansion des microparticules peut entraîner une déchirure de ladite au moins une zone de fragilisation, conduisant à la rupture de la connexion entre les deux éléments électrochimiques. Ladite au moins une zone de fragilisation peut être obtenue en réduisant localement l'épaisseur de la pièce de connexion.

Les microparticules peuvent ne pas être conductrices d'électricité.

Selon l'invention, la valeur seuil est inférieure à 150°C. Une valeur seuil supérieure ou égale à 150°C ne permet pas un déclenchement suffisamment rapide du dispositif. L'invention exclut donc le graphite expansible qui s'expand lorsque sa température atteint une valeur seuil supérieure à 150°C.

L'invention a également pour second objet une batterie comprenant :
- au moins deux éléments électrochimiques, chaque élément électrochimique comprenant au moins deux bornes de sortie de courant, et
- au moins un ensemble tel que décrit ci-dessus, la pièce de connexion étant connectée entre une borne de sortie de courant d'un premier élément électrochimique et une borne de sortie de courant d'un second élément électrochimique.

Selon un mode de réalisation, lesdits au moins deux éléments électrochimiques peuvent être de format cylindrique ou prismatique.

Ledit ensemble selon l'invention s'applique à tous types de générateurs électrochimiques, plus particulièrement aux éléments électrochimiques de type lithium-ion à électrolyte liquide ou solide, lithium-métal à électrolyte liquide ou solide, nickel métal-hydrure ou nickel cadmium.

L'invention a pour troisième objet un élément électrochimique comprenant :
a) au moins deux bornes de sortie de courant de polarités opposées (7,8), et
b) un dispositif de mise en court-circuit (4) de deux bornes de polarités opposées (7,8), ledit dispositif comprenant :
   i) des microparticules (5) aptes à s'expandre lorsque leur température atteint une valeur seuil, ladite valeur seuil étant inférieure à 150°C,
   ii) une capsule (4a, 4b) entourant l'ensemble des microparticules, ladite capsule étant constituée d'un matériau conducteur de courant électrique ou constituée d'un matériau non conducteur de courant électrique, ledit matériau non conducteur de courant électrique étant soit recouvert d'un revêtement conducteur électrique, soit en contact avec une pièce électriquement conductrice, ladite capsule étant disposée en sorte que, lorsque la température des microparticules atteint ladite valeur seuil, l'expansion des microparticules entraîne une déformation de la capsule, la déformation de la capsule ayant pour effet de connecter deux bornes de polarités opposées.

On entend par dispositif de mise en court-circuit, un dispositif permettant la mise en contact électrique de deux bornes de polarités opposées d'un même élément.

Les microparticules utilisées dans l'élément électrochimique selon le troisième objet de la présente invention, présentent les mêmes caractéristiques techniques que celles décrites ci-dessus dans le cadre de l'ensemble, premier objet selon l'invention.

L'élément électrochimique, 3^{ème} objet de l'invention, comprend un moyen d'interruption du passage du courant dans l'élément lorsque le courant excède une valeur déterminée. Ce moyen peut être un fusible connecté entre les deux bornes de polarités opposées. Le fusible peut être connecté en série avec le faisceau électrochimique.

La capsule de l'élément électrochimique, troisième objet de l'invention, peut être constituée d'un matériau apte à se déformer lors de l'expansion des microparticules, la déformation de la capsule entraînant une continuité électrique entre les deux bornes de polarité opposée de l'élément.

Ladite capsule de l'élément électrochimique peut être constituée d'un matériau conducteur de courant électrique. Le matériau conducteur de courant électrique peut être choisi parmi l'aluminium, le cuivre et l'acier inoxydable.

Selon un autre mode de réalisation, la capsule peut être constituée d'un matériau non conducteur de courant électrique recouvert d'un revêtement conducteur électrique. Le matériau non conducteur de courant électrique peut être une matière plastique. De préférence, la matière plastique est un film en polyimide (Kapton). Un matériau conducteur est appliqué sur la capsule en matière plastique par exemple par pulvérisation.

Lorsque la capsule est constituée d'un matériau non conducteur, l'élément électrochimique selon l'invention peut comprendre en outre une pièce électriquement conductrice en contact avec ladite capsule, la déformation de la capsule entraine le déplacement de la pièce électriquement conductrice. Ce déplacement entraine la mise en court-circuit des deux bornes de polarités opposées dudit élément. Ladite pièce électriquement conductrice peut être un bilame métallique. Ladite pièce électriquement conductrice peut être constitué d'un matériau à mémoire de forme.

La capsule de l'élément électrochimique peut être placée sur un support. Dans un mode de réalisation particulier, le couvercle de l'élément électrochimique présente une cavité dans laquelle la capsule est logée.

L'élément électrochimique tel que décrit ci-dessus, 3^{ème} objet de l'invention, peut comprendre :
a) un conteneur comprenant une ouverture pour l'introduction d'un faisceau électrochimique, et
b) un couvercle placé sur ladite ouverture,
dans lequel lesdites au moins deux bornes de sortie de courant de polarités opposées et le dispositif de mise en court-circuit sont placés sur ou à travers le couvercle.

Selon un mode de réalisation, une des au moins deux bornes de sortie de courant peut être en contact direct avec le couvercle. La borne positive peut être en contact direct avec le couvercle et au même potentiel que celui-ci. La borne négative peut être isolée électriquement du couvercle. Inversement, la borne positive peut être isolée électriquement du couvercle et la borne négative peut être en contact direct avec le couvercle et au même potentiel que celui-ci.

Selon un mode de réalisation, l'élément électrochimique selon l'invention peut être de type lithium-ion à électrolyte liquide ou solide, lithium-métal à électrolyte liquide ou solide, nickel métal-hydrure ou nickel cadmium.

Selon un mode de réalisation, l'élément électrochimique selon l'invention peut être de format cylindrique, prismatique ou de type pochette (pouch cell).

L'invention a pour quatrième objet une batterie comprenant au moins un élément électrochimique tel que défini ci-dessus, troisième objet de l'invention.

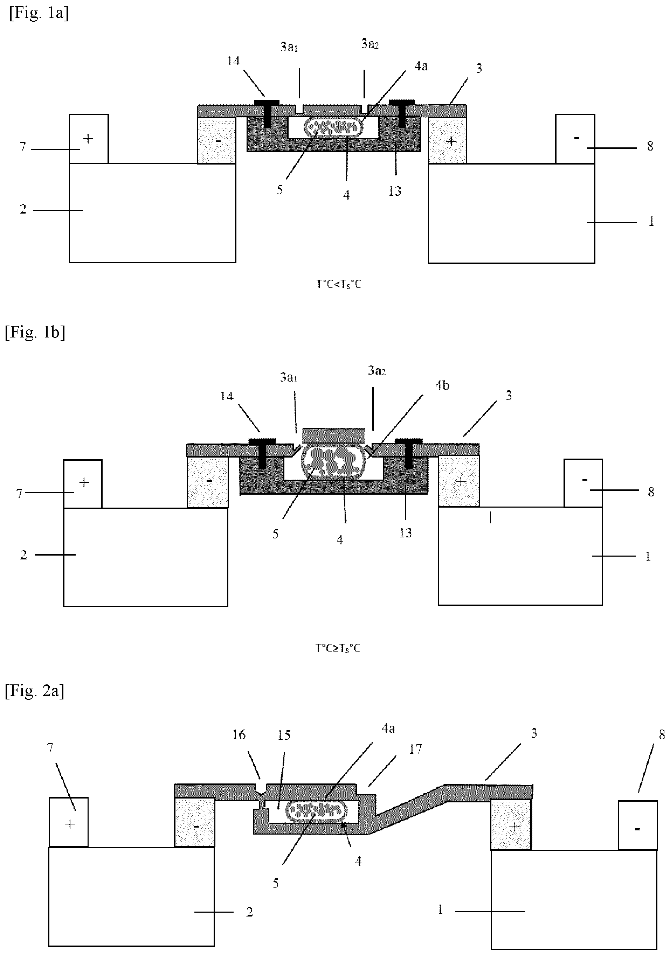

La présente invention sera mieux comprise en faisant référence aux figures 1a à 3.

Figure 1a : Le dispositif de déconnexion compris dans l'ensemble, premier objet de la présente invention, est destiné à déconnecter deux éléments électrochimiques (1,2) reliés entre eux par une pièce de connexion (3). La pièce de connexion comprend deux zones de fragilisation (3a₁, 3a₂). Chaque zone de fragilisation est constituée d'un amincissement de la pièce de connexion (3). Il est entendu que la présente invention peut également être mise en oeuvre dans le cas où la pièce de connexion comprend une seule zone de fragilisation.

Chaque élément comprend une borne de sortie de courant positive (7) et une borne de sortie de courant négative (8). Une capsule (4) contenant des microparticules (5) est placée au contact de la surface inférieure de la pièce de connexion. Lorsque la température des microparticules (5) est inférieure à une valeur seuil qui elle-même est inférieure à 150°C, la capsule (4) qui repose sur un support (13), occupe une position neutre (4a) et les microparticules présentent chacune un volume équivalent au volume d'une sphère pleine d'un diamètre d₁ allant de 10 à 50 µm. Le support est fixé à la pièce de connexion à l'aide de moyens de fixation, par exemple une vis (14).

Figure 1b : Lorsque la température des microparticules (5) atteint ladite valeur seuil qui peut être comprise entre 80 et 149°C, de préférence entre 80 et 120°C, alors les microparticules entrent en expansion jusqu'à atteindre chacune un volume équivalent à celui d'une sphère pleine d'un diamètre d₂ qui est 3 à 5 fois supérieur au diamètre d₁.

L'expansion des microparticules (5) entraine la déformation de la capsule (4) qui occupe alors la position 4b. La capsule en position 4b vient donc exercer une pression au niveau de la pièce de connexion (3). Dans le mode de réalisation particulier décrit dans la figure 1b, la capsule en position 4b exerce une pression au voisinage des zones de fragilisation (3a₁ et 3a₂) de la pièce de connexion (3). Cette pression est telle qu'elle casse la pièce de connexion (3) et rompt ainsi la connexion entre les deux éléments électrochimiques (1) et (2).

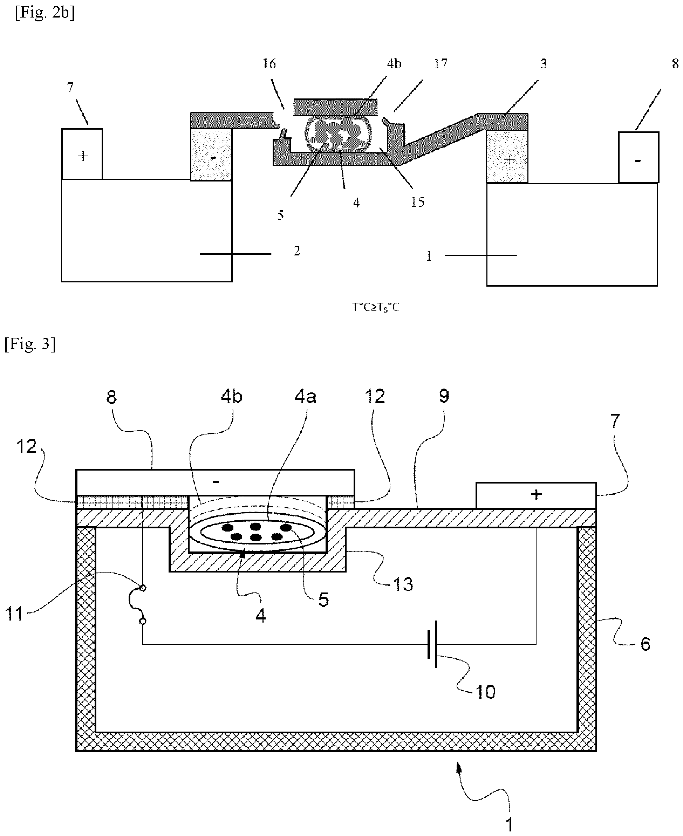

Les figures 2a et 2b illustrent un autre mode de réalisation du dispositif de déconnexion dans lequel la capsule (4) se situe dans une cavité (15) aménagée dans la pièce de connexion (3). Les parois de la cavité présentent deux zones de fragilisation (16, 17). Lorsque la température des microparticules (5) atteint ladite valeur seuil, la capsule vient exercer une pression au voisinage des deux zones de fragilisation (16, 17) entraînant ainsi, la rupture de la pièce de connexion et par conséquent la rupture de la connexion électrique entre les deux éléments électrochimiques (1) et (2).

Le fonctionnement du dispositif de mise en court-circuit compris dans l'élément électrochimique, troisième objet de l'invention, est illustré par un mode de réalisation particulier (voir figure 3). L'élément électrochimique (1) tel que représenté à la figure 3 comprend :
- un conteneur (6),
- une borne positive (7) et une borne négative (8),
- un couvercle (9),
- un faisceau électrochimique (10), encore appelé jeu de plaques,
- un fusible (11),
- une capsule (4) comprenant les microparticules (5),
- une couche d'un isolant électrique (12).

Dans ce mode de réalisation particulier, la capsule (4) est positionnée dans un renfoncement du couvercle (9). Ce renfoncement forme ainsi un support (13). Le conteneur (6) et le couvercle (9) sont au même potentiel que la borne positive (7). Une couche d'isolant électrique (12) située sur le couvercle (9), isole la borne négative (8) dudit couvercle. Lorsque la température des microparticules (5) est inférieure à une valeur seuil qui elle-même est inférieure à 150°C, la capsule (4) occupe une position neutre (4a) et les microparticules présentent chacune un volume équivalent au volume d'une sphère plein d'un diamètre d₁ allant de 10 à 50 µm. Lorsque la température des microparticules (5) atteint ladite valeur seuil qui peut être comprise entre 80 et 149°C, de préférence entre 80 et 120°C, alors les microparticules entrent en expansion jusqu'à atteindre chacune un volume équivalent au volume d'une sphère pleine d'un diamètre d₂ qui est 3 à 5 fois supérieur au diamètre d₁. L'expansion des microparticules entraine ainsi la déformation de la capsule (4) qui occupe alors la position (4b). Lorsque la capsule occupe la position (4b), elle est directement en contact avec la borne négative (8). Dans ce mode de réalisation, la capsule (4) est constituée d'un matériau conducteur électrique, le courant électrique est donc dévié pour passer à travers la capsule (4) jusqu'à atteindre la borne positive (7) créant ainsi un court-circuit et déclenchant le fusible (11). Le déclenchement du fusible (11) interrompt le passage du courant dans l'élément électrochimique empêchant ainsi la survenue d'un éventuel emballement thermique.

## Revendications

1. Ensemble comprenant :
a) une pièce de connexion (3) comportant au moins une zone de fragilisation (3a, 3b) et
b) un dispositif de déconnexion (4) ledit dispositif de déconnexion étant destiné à déconnecter deux éléments électrochimiques (1, 2) reliés entre eux par ladite pièce de connexion (3), ledit dispositif de déconnexion comprenant :
i) des microparticules (5) aptes à s'expandre lorsque leur température atteint une valeur seuil, ladite valeur seuil étant inférieure à 150°C,
ii) une capsule (4a, 4b) entourant l'ensemble des microparticules,
ladite capsule étant disposée en sorte que, lorsque la température des microparticules atteint ladite valeur seuil, l'expansion des microparticules entraîne une déformation de la capsule, cette déformation exerçant une pression au voisinage de la dite au moins une zone de fragilisation, la pression entraînant une déchirure de ladite au moins une zone de fragilisation, la déchirure conduisant à une rupture de la connexion entre lesdits deux éléments électrochimiques.

2. Ensemble selon la revendication 1, dans lequel ladite capsule est constituée d'un matériau non conducteur de courant électrique.

3. Ensemble selon la revendication 1 ou 2, dans lequel les microparticules sont des microsphères.

4. Ensemble selon l'une quelconque des revendications précédentes, dans lequel les microparticules ne sont pas conductrices d'électricité.

5. Batterie comprenant :
- au moins deux éléments électrochimiques, chaque élément électrochimique (1,2) comprenant au moins deux bornes de sortie de courant, et
- au moins un ensemble selon l'une quelconque des revendications 1 à 4,
la pièce de connexion (3) étant connectée entre une borne de sortie de courant d'un premier élément électrochimique et une borne de sortie de courant d'un second élément électrochimique.

6. Elément électrochimique comprenant :
a) au moins deux bornes de sortie de courant de polarités opposées (7,8), et
b) un dispositif de mise en court-circuit (4) de deux bornes de polarités opposées (7,8), ledit dispositif comprenant :
i) des microparticules (5) aptes à s'expandre lorsque leur température atteint une valeur seuil, ladite valeur seuil étant inférieure à 150°C,
ii) une capsule (4a, 4b) entourant l'ensemble des microparticules, ladite capsule étant constituée d'un matériau conducteur de courant électrique ou constituée d'un matériau non conducteur de courant électrique, ledit matériau non conducteur de courant électrique étant soit recouvert d'un revêtement conducteur électrique, soit en contact avec une pièce électriquement conductrice,
ladite capsule étant disposée en sorte que, lorsque la température des microparticules atteint ladite valeur seuil, l'expansion des microparticules entraîne une déformation de la capsule, la déformation de la capsule ayant pour effet de connecter deux bornes de polarités opposées.

7. Elément électrochimique selon la revendication 6, comprenant un fusible (11), connecté entre les deux bornes de polarité opposée.

8. Elément électrochimique selon la revendication 6 ou 7, dans lequel le matériau conducteur de courant électrique de ladite capsule est choisi parmi l'aluminium, le cuivre et l'acier inoxydable.

9. Elément électrochimique selon la revendication 6 ou 7, dans lequel le matériau non conducteur de courant électrique de ladite capsule est une matière plastique.

10. Elément électrochimique selon la revendication 6 ou 7, dans lequel la pièce électriquement conductrice est un bilame métallique.

11. Elément électrochimique selon la revendication 6 ou 7, dans lequel la pièce électriquement conductrice est constituée d'un matériau à mémoire de forme.

12. Elément électrochimique selon l'une quelconque des revendications 6 à 11, comprenant :
a) un conteneur (6) comprenant une ouverture pour l'introduction d'un faisceau électrochimique (10), et
b) un couvercle (9) placé sur ladite ouverture,
dans lequel lesdites au moins deux bornes de sortie de courant de polarités opposées (7, 8) et le dispositif de mise en court-circuit (4) sont placés sur ou à travers le couvercle (9).

13. Elément électrochimique selon la revendication 12, dans lequel une des au moins deux bornes de sortie de courant (7) est en contact direct avec le couvercle et une borne de polarité opposée (8) est isolée électriquement du couvercle.

14. Elément électrochimique selon l'une quelconque des revendications 6 à 13, de type lithium-ion à électrolyte liquide ou solide, lithium-métal à électrolyte liquide ou solide, nickel métal-hydrure ou nickel cadmium.

15. Batterie comprenant au moins un élément électrochimique selon l'une quelconque des revendications 6 à 14.

## Patentansprüche

1. Anordnung, umfassend:
a) ein Verbindungsstück (3), umfassend mindestens einen Schwächungsbereich (3a, 3b), und
b) eine Trennvorrichtung (4), wobei die genannte Trennvorrichtung dazu bestimmt ist, um zwei elektrochemische Elemente (1, 2) zu trennen, die durch das genannte Verbindungsstück (3) miteinander verbunden sind, wobei die Trennvorrichtung umfasst:
i) Mikropartikel (5), die dafür geeignet sind, um sich zu expandieren, wenn ihre Temperatur einen Schwellenwert erreicht, wobei der genannte Schwellenwert kleiner ist als 150 °C,
ii) eine Kapsel (4a, 4b), welche die Anordnung von Mikropartikeln umgibt, wobei die genannte Kapsel derart angeordnet ist, dass, wenn die Temperatur der Mikropartikel den genannten Schwellenwert erreicht, die Expansion der Mikropartikel eine Verformung der Kapsel bewirkt, wobei diese Verformung einen Druck in der Nähe des genannten mindestens einen Schwächungsbereichs ausübt, wobei der Druck ein Reißen des genannten mindestens einen Schwächungsbereichs bewirkt, wobei das Reißen zu einem Bruch der Verbindung zwischen den genannten zwei elektrochemischen Elementen führt.

2. Anordnung nach Anspruch 1, wobei die genannte Kapsel aus einem für elektrischen Strom nicht leitenden Material besteht.

3. Anordnung nach Anspruch 1 oder 2, wobei die Mikropartikel Mikrosphären sind.

4. Anordnung nach einem der vorhergehenden Ansprüche, wobei die Mikropartikel für Strom nicht leitend sind.

5. Batterie, umfassend:
- mindestens zwei elektrochemische Elemente, wobei jedes elektrochemische Element (1, 2) mindestens zwei Stromausgangsanschlüsse umfasst, und
- mindestens eine Anordnung nach einem der Ansprüche 1 bis 4,
wobei das Verbindungsstück (3) zwischen einem Stromausgangsanschluss eines ersten elektrochemischen Elements und einem Stromausgangsanschluss eines zweiten elektrochemischen Elements angeschlossen ist.

6. Elektrochemisches Element, umfassend:
a) mindestens zwei Stromausgangsanschlüsse (7, 8) mit entgegengesetzten Polaritäten, und
b) eine Kurzschlussvorrichtung (4) der zwei Anschlüsse (7, 8) mit entgegengesetzten Polaritäten,
wobei die genannte Vorrichtung umfasst:
i) Mikropartikel (5), die dafür geeignet sind, um sich zu expandieren, wenn ihre Temperatur einen Schwellenwert erreicht, wobei der genannte Schwellenwert kleiner ist als 150 °C,
ii) eine Kapsel (4a, 4b), welche die Anordnung von Mikropartikeln umgibt, wobei die genannte Kapsel aus einem für elektrischen Strom leitenden Material besteht oder aus einem für elektrischen Storm nicht leitenden Material besteht, wobei das genannte für elektrischen Strom nicht leitende Material entweder mit einer elektrisch leitenden Beschichtung bedeckt ist oder mit einem elektrisch leitenden Stück in Kontakt steht,
wobei die genannte Kapsel derart angeordnet ist, dass, wenn die Temperatur der Mikropartikel den genannten Schwellenwert erreicht, die Expansion der Mikropartikel eine Verformung der Kapsel bewirkt, wobei die Verformung der Kapsel den Effekt hat, zwei Anschlüsse mit entgegengesetzten Polaritäten zu verbinden.

7. Elektrochemisches Element nach Anspruch 6, umfassend eine Sicherung (11), die zwischen den zwei Anschlüssen mit entgegengesetzter Polarität angeschlossen ist.

8. Elektrochemisches Element nach Anspruch 6 oder 7, wobei das für elektrischen Strom leitende Material der genannten Kapsel aus Aluminium, Kupfer und rostfreiem Strahl ausgewählt ist.

9. Elektrochemisches Element nach Anspruch 6 oder 7, wobei das für elektrischen Strom nicht leitende Material der genannten Kapsel ein Kunststoffmaterial ist.

10. Elektrochemisches Element nach Anspruch 6 oder 7, wobei das elektrisch leitende Stück ein Bimetallstreifen ist.

11. Elektrochemisches Element nach Anspruch 6 oder 7, wobei das elektrisch leitende Stück aus einem Material mit Formgedächtnis besteht.

12. Elektrochemisches Element nach einem der Ansprüche 6 bis 11, umfassend:
a) einen Behälter (6), umfassend eine Öffnung zum Einführen eines elektrochemischen Strahls (10), und
b) eine Abdeckung (9), die auf die genannte Öffnung platziert ist,
wobei die genannten mindestens zwei Stromausgangsanschlüsse (7, 8) mit entgegengesetzten Polaritäten und die Kurzschlussvorrichtung (4) auf oder quer über die Abdeckung (9) platziert sind.

13. Elektrochemisches Element nach Anspruch 12, wobei einer der mindestens zwei Stromausgangsanschlüsse (7) in direktem Kontakt mit der Abdeckung steht, und ein Anschluss (8) mit entgegengesetzter Polarität elektrisch gegen die Abdeckung isoliert ist.

14. Elektrochemisches Element nach einem der Ansprüche 6 bis 13, vom Typ Lithiumionen mit flüssigem oder festen Elektrolyt, Lithiummetall mit flüssigem oder festem Elektrolyt, Nickelmetallhydrid oder Nickelcadmium.

15. Batterie, umfassend mindestens ein elektrochemisches Element nach einem der Ansprüche 6 bis 14.

## Claims

1. An assembly including:
a) a connection part (3) comprising at least one region of weakness (3a, 3b), and
b) a disconnection device (4) said disconnection device being intended to disconnect two electrochemical cells (1, 2) connected together by said connection part (3), said disconnection device comprising:
i) microparticles (5) capable of expanding when their temperature reaches a threshold value, said threshold value being less than 150°C,
ii) a capsule (4a, 4b) surrounding all of the microparticles,
said capsule being arranged so that, when the temperature of the microparticles reaches said threshold value, the expansion of the microparticles causes a deformation of the capsule, this deformation exerting a pressure in the vicinity of said at least one region of weakness, the pressure causing a tear in said at least one region of weakness, the tear leading to a break in the connection between said two electrochemical cells.

2. The assembly according to claim 1, wherein said capsule is made of a material that does not conduct electric current.

3. The assembly according to claim 1 or 2, in which the microparticles are microspheres.

4. The assembly according to any one of the preceding claims, in which the microparticles do not conduct electricity.

5. A battery including:
- at least two electrochemical cells, each electrochemical cell (1, 2) comprising at least two current output terminals, and
- at least one assembly according to any one of claims 1 to 4,
the connection part (3) being connected between a current output terminal of a first electrochemical cell and a current output terminal of a second electrochemical cell.

6. The electrochemical cell comprising:
a) at least two current output terminals of opposite polarities (7, 8), and
b) a device for short-circuiting (4) two terminals of opposite polarities (7, 8), said device comprising:
i) microparticles (5) capable of expanding when their temperature reaches a threshold value, said threshold value being less than 150°C,
ii) a capsule (4a, 4b) surrounding all of the microparticles, said capsule being made of a material that conducts an electric current or made of a material that is not a conductor of an electric current, said material that is not a conductor of an electric current is either covered an electrically conductive coating, or in contact with an electrically conductive part,
said capsule being arranged so that, when the temperature of the microparticles reaches said threshold value, the expansion of the microparticles causes a deformation of the capsule, the deformation of the capsule having the effect of connecting two terminals of opposite polarities.

7. The electrochemical cell according to claim 6, comprising a fuse (11), connected between the two terminals of opposite polarity.

8. The electrochemical cell according to claim 6 or 7, in which the electric current conducting material of said capsule is chosen from aluminum, copper and stainless steel.

9. The electrochemical cell according to claim 6 or 7, in which the non-electric current conducting material of said capsule is a plastic material.

10. The electrochemical cell according to claim 6 or 7, in which the electrically conductive part is a metal bimetallic strip.

11. The electrochemical cell according to claim 6 or 7, in which the electrically conductive part consists of a shape memory material.

12. The electrochemical cell according to any one of claims 6 to 11, comprising:
a) a container (6) comprising an opening for the introduction of an electrode plate group (10), and
b) a cover (9) placed on said opening,
wherein said at least two current output terminals of opposite polarities (7, 8) and the short-circuiting device (4) are placed on or through the cover (9).

13. The electrochemical cell according to claim 12, wherein one of the at least two current output terminals (7) is in direct contact with the cover and a terminal of opposite polarity (8) is electrically isolated from the cover.

14. The electrochemical cell according to any one of claims 6 to 13, of the lithium-ion type with liquid or solid electrolyte, lithium-metal with liquid or solid electrolyte, nickel metal-hydride or nickel cadmium.

15. A battery comprising at least one electrochemical cell according to any one of claims 6 to 14.
